# EUROPÄISCHE PATENTSCHRIFT

(11) **EP 1 228 985 B1**
(45) Veröffentlichungstag und Bekanntmachung des Hinweises auf die Patenterteilung: **25.01.2006**
(21) Anmeldenummer: 02001757.0
(22) Anmeldetag: 25.01.2002
(51) Int. Cl.: B65G 47/68, B65G 21/20

(54) **Vorrichtung und Verfahren zum Transport von Gegenständen wie Flaschen**
Device and method for conveying articles such as bottles
Dispositif et procédé pour le transport d'articles comme des bouteilles

(30) Priorität: 03.02.2001 DE 10104873
(43) Veröffentlichungstag der Anmeldung: 07.08.2002
(73) Patentinhaber: ROBERT BOSCH GMBH, 70442 Stuttgart (DE)
(72) Erfinder: Brechel, Karl, 74595 Leonberg (DE); Ebert, August, 74597 Stimpfach (DE)

(56) Entgegenhaltungen:
- CH-A- 425 625
- DE-A- 2 911 121
- DE-A- 3 613 724
- DE-B- 1 004 539

## Beschreibung

Die Erfindung betrifft eine Vorrichtung und ein Verfahren zum Transport von Gegenständen von einer Einlaufseite zu einer Auslaufseite, insbesondere von Flaschen von einem Sterilisiertunnel in eine Füllmaschine, mit einem Bi-flow-Bandsystem, das mindestens zwei parallele, in Gleich- oder Gegenrichtung laufende Förderbänder umfasst, und mit oberhalb der Förderbänder des Bi-flow-Bandsystems angeordneten Führungsteilen zur Führung der auf den Förderbändern geförderten Gegenstände in Richtung zur Auslaufseite und mit einem Abtransportband zur Aufnahme vereinzelter Gegenstände vom Bi-flow-Bandsystem zur Förderung dieser Gegenstände in einer Reihe zur Auslaufseite. Derartige Vorrichtungen werden insbesondere zur Befüllung von sterilisierten Flaschen eingesetzt, es sind jedoch auch andere Anwendungen denkbar, bei denen beispielsweise eine große Menge von Gegenständen einzeln, der Reihe nach befüllt oder verpackt werden muss.

### Stand der Technik

Speziell bei der Verarbeitung von Injektions- und Infusionsflaschen sowie anderen Flaschen für liquide oder pulverförmige pharmazeutische Produkte steht man oft vor dem Problem, Flaschen unterschiedlichster Größen zur Befüllung zu verarbeiten. Es sollen standfeste große Flaschen (beispielsweise von 100, 250, 500 ml Größe, aber auch kleine, nicht standfeste Flaschen (beispielsweise Injektionsvials von 2, 4, 6, 8, 10 ml Größe) auf einer Anlage sicher und ohne Störungen verarbeitbar sein.

Dies stellt für die Flaschenüberleitung zwischen Sterilisiertunnel und der Füllmaschine ein großes Problem dar. Nicht standfeste Flaschen, z. B. kleine Vials, fallen um, wenn sich in der Überleitungsstrecke Lücken bilden oder bekommen Kratzer auf der Mantelfläche, wenn die Vereinzelung von der Masse in eine Reihe mit großem Flaschenstress, d. h. mit häufigem Kontakt und/oder hoher Reibung zwischen den Flaschen, erfolgt. Bei großen Flaschen bilden sich oft Brücken, insbesondere wenn die Flaschen durch Heißsterilisieren sehr stumpf sind und aufgrund des resultierenden hohen Reibungskoeffizienten aneinander kleben. Diese Brücken stören den Flaschenfluss und können ebenfalls zu Kratzern führen.

Zur Beseitigung der Gefahr von Brückenbildung werden häufig Querbänder eingesetzt, die die Flaschen am Flaschenumfang erfassen und mitziehen und somit eine Flaschenbrücke auflösen. Solche Querbänder führen jedoch zu Streifen und Kratzern auf der Flaschenoberfläche.

Bei dem zur Förderung und Vereinzelung der Gegenstände eingesetzten Bi-flow-Bandsystem werden die Gegenstände meist rechtwinklig auf ein Förderband dieses Systems transportiert und dort mit Hilfe von Führungsteilen auf Bahnen gelenkt, deren Breite sich kontinuierlich verringert. Es tritt hierdurch eine Vereinzelung auf, so dass die Gegenstände schließlich in einer Reihe mittels eines Abtransportbandes beispielsweise einer Füllmaschine zugeführt werden können. Es existieren unterschiedliche Lösungen solcher Systeme jeweils für einen eingeschränkten Durchmesser- und Förderleistungsbereich. Ungelöst war bisher die Aufgabe, auf einer Linie/Einzelmaschine einen Verarbeitungsbereich vorzusehen, der das ganze Spektrum standfester bis labil stehender Gegenstände, beispielsweise von verschieden großen Injektions- und Infusionsflaschen umfasst.

Aus der DE-B-1004539 sind ein Verfahren und eine Vorrichtung zum Ausrichten und Hintereinanderreihen von Gegenständen bekannt. Es sind zwei endlose, mindestens in einem endlichen Bereich parallel zueinander verlaufende und nebeneinander angeordnete, in entgegengesetzter Richtung bewegte Transportorgane vorgesehen sowie eine im parallelen Bereich angeordnete Abstreifvorrichtung, welche dazu bestimmt ist, die vom ersten Transportorgan ungeordnet herangeführten Gegenstände auf das zweite Transportorgan hinüberzufördern. Das zweite Transportorgan ist im parallelen Bereich an der Außenseite mit einem Anschlag versehen.

Aus der DE-A-3613724 ist eine Vorrichtung zum Linieren von Behältern bekannt. Diese weist einen Fördertisch und mehrere zueinander parallele Trennstege, die in Transportrichtung der Behälter verlaufende Gassen bilden, auf. Die Trennstege enthalten senkrechte, in Transportrichtung der Behälter verlaufende Seitenwände, die an ihrem in Transportrichtung gesehen vorderen Ende durch eine leicht angeschrägte Fläche miteinander verbunden sind. Die in Transportrichtung gesehen vorderen spitzen Enden der Trennstege sind in Transportrichtung der Behälter in einem Abstand voneinander angeordnet, der etwa dem Zwei- bis Vierfachen des Behälterdurchmessers entspricht.

### Vorteile der Erfindung

Die Erfindung geht aus von einer Vorrichtung zum Transport von Gegenständen wie Flaschen von einer Einlaufseite zu einer Auslaufseite, mit einem Bi-Flow-Bandsystem, das mindestens zwei parallele, in Gleich- oder Gegenrichtung laufende Förderbänder umfasst, mit oberhalb der Förderbänder angeordneten, austauschbaren Führungsteilen zur Führung der auf den Förderbändern geförderten Gegenstände in Richtung zur Auslaufseite und mit einem Abtransportband zur Aufnahme vereinzelter Gegenstände vom Bi-Flow-Bandsystem zur Förderung dieser Gegenstände in einer Reihe zur Auslaufseite, wobei zwei durch die Form der Führungsteile verschiedene Sätze von Führungsteilen vorgesehen sind und dass die Laufrichtung der Förderbänder umstellbar ist, derart, dass zwei parallel nebeneinander angeordnete Förderbänder in Abhängigkeit des eingesetzten Satzes Führungsteile stets im Gleichlauf oder stets im Gegenlauf angetrieben sind, wobei beim Gleichlauf der Förderbänder die Förderbänder unterschiedliche Geschwindigkeiten aufweisen.

Die Erfindung stellt eine eingangs genannte Vorrichtung zur Verfügung, bei der die Führungsteile abnehmbar ausgestaltet und abhängig von den zu transportierenden Gegenständen durch anders geformte Führungsteile ersetzbar sind, wobei wiederum abhängig von den eingesetzten Führungsteilen die Laufrichtung und/oder Laufgeschwindigkeit der Förderbänder des Bi-flow-Bandsystems umstellbar ist. Bei dieser Vorrichtung werden für labil stehende Gegenstände, also beispielsweise kleine Injektionsvials, die Förderbänder des Bi-flow-Bandsystems in Gleichrichtung mit unterschiedlichen Geschwindigkeiten betrieben und Führungsteile eingesetzt, die die Bahnbreite des Systems in Richtung Abtransportband trichter- oder trompetenförmig verengen. Hingegen werden für standfeste Gegenstände, also beispielsweise Infusionsflaschen, die Förderbänder des Bi-flow-Bandsystems in Gegenrichtung betrieben und Führungsteile eingesetzt, die die Gegenstände zunächst auf das zum Abtransportband hinlaufende Förderband transportieren, in eine Führungsbahn einsortieren und vereinzelt dem Abtransportband zuführen.

Die Erfindung macht es möglich, mit einer Maschinenkonfiguration verschieden geartete Gegenstände, insbesondere kleine nicht standfeste Flaschen und große Flaschen, vereinzeln zu können. Hierdurch sind die Anzahl der Ausführungsvarianten solcher Maschinen und damit der Konstruktionsaufwand sowie die Komplexität begrenzt. Da häufig derartige Bi-flow-Bandsysteme von Reinräumen umgeben sind, ist es erstrebenswert, nur eine Maschine für alle Flaschentypen einzusetzen und die Größe dieser Maschine klein zu halten. Dies wird durch die Erfindung ermöglicht. Vorteilhafte Ausgestaltungen der Erfindung ergeben sich aus den jeweiligen Unteransprüchen und der nachfolgenden Beschreibung.

Zur effektiven Vereinzelung der Flaschen, d. h. zur Vermeidung der genannten Brückenbildung sowie zur Vermeidung von Lücken im Flaschenpulk, ist es besonders vorteilhaft, wenn zumindest ein Schwingantrieb im Übergangsbereich vom Bi-flow-Bandsystem zum Abtransportband angeordnet ist. Dieser Schwingantrieb kann dann elektromagnetisch erzeugte Vibrationen über Komponenten der Vorrichtung in diesem Übergangsbereich auf die Flaschen übertragen, wodurch der Flaschenpulk aufgelockert wird, was der Bildung von Brücken und Lücken entgegenwirkt. Hierzu ist der Schwingantrieb derart angeordnet, dass die Vibrationen auf den Boden des Übergangsbereichs, also auf eine zwischen den Förderbändern des Bi-flow-Bandsystems und dem Abtransportband angeordneten Bodenplatte, auf das Abtransportband selbst und/oder auf Abschnitte der seitlichen Führungsteile übertragen werden.

Die Inbetriebnahme dieser Schwingantriebe hat sich für alle Arten von Gegenständen, insbesondere aber auch für kleine, labil stehende Gegenstände wie Injektionsfläschchen als günstig erwiesen. Für labil stehende Gegenstände wie diese Fläschchen kann im Übergangsbereich vom Bi-flow-Bandsystem zum Abtransportband eine stabilisierende Seitenführung vorgesehen sein. Diese Seitenführung wird vorteilhaft auch in Vibration versetzt, wobei dies durch einen eigens vorgesehenen Schwingantrieb erfolgen kann. Diese Seitenführung verengt die für die transportierenden Gegenstände zur Verfügung stehende Bahn kontinuierlich zum Abtransportband hin. Die Kombination von Schwingantrieb und auswechselbaren Führungsteilen, insbesondere von Schwingantrieb und Seitenführung,hat sich als besonders vorteilhaft erwiesen.

Das Abtransportband kann innerhalb der erfindungsgemäßen Vorrichtung vorteilhafterweise entweder senkrecht oder parallel zu den Förderbändern des Bi-flow-Bandsystems angeordnet sein. Abhängig von den zu transportierenden Gegenständen wird eine Anordnung gewählt, die den geringsten Flaschenstress hervorruft.

Auf dem Bi-flow-Bandsystem sollten Mittel zur Stauregelung vorgesehen sein, um die Zufuhr von Gegenständen von der Einlaufseite her zu regeln, um einen Stau im Übergangsbereich zum Abtransportband zu verhindern. Als Mittel zur Stauregelung ist beispielsweise eine Lichtschranke geeignet, die das Übertreten einzelner Flaschen über die erzeugte Lichtschranke registriert und entsprechende Maßnahmen zur Verringerung der eingebrachten Gegenstände trifft. Weiterhin kann ein quer zur Einlaufrichtung der Gegenstände gespanntes flexibles Band zur Stauregelung verwendet werden, dessen Dehnung registriert wird und zur Regelung der einlaufenden Menge von Gegenständen verwendet wird.

### Zeichnungen

Die Erfindung soll im folgenden anhand von mittels Figuren dargestellten Ausführungsbeispielen näher erläutert werden.
- Figur 1: zeigt eine Ausführungsform einer erfindungsgemäßen Vorrichtung, die sich insbesondere zum Transport labil stehender Gegenstände wie Fläschchen eignet.
- Figur 2: zeigt die Vorrichtung der Figur 1 mit erfindungsgemäß ersetzten Führungsteilen, die insbesondere zum Transport stabil stehender Flaschen geeignet sind.
- Figur 3: zeigt eine ähnliche Anordnung einer erfindungsgemäßen Vorrichtung wie Figur 1, jedoch in einer Ausführung, bei der Abtransportband und Förderbänder des Bi-flow-Bandsystems parallel laufen.
- Figur 4: zeigt eine zur Anordnung der Figur 2 ähnliche Ausführungsform in der Anordnung entsprechend Figur 3.
- Figur 5: zeigt die Vorrichtung gemäß Figur 1 in einer Seitenansicht.

### Beschreibung der bevorzugten Ausführungsformen

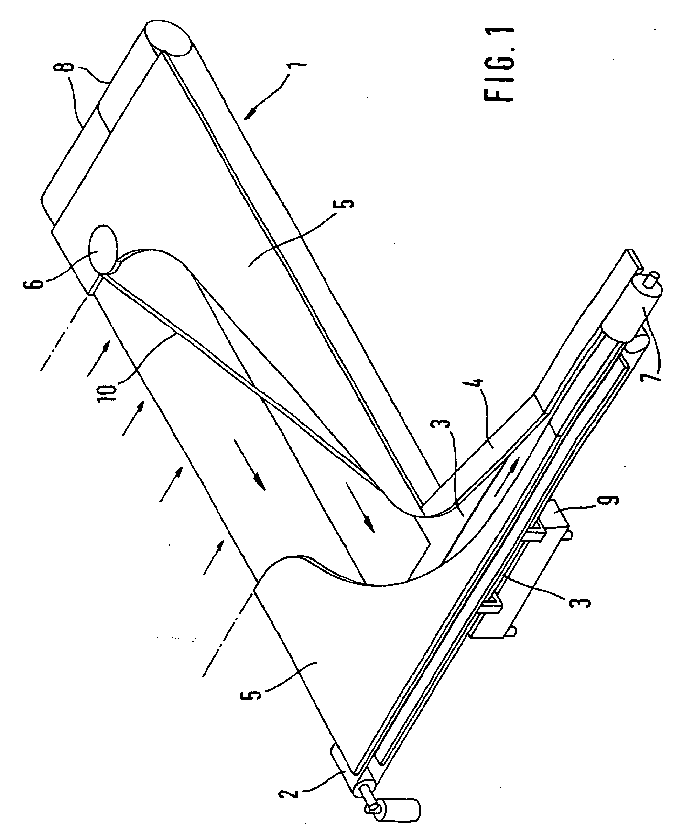

Die Vorrichtung der Figur 1 dient zur Flaschenüberleitung standfester und nicht standfester Flaschen von einem Sterilisiertunnel, das sich an die Eingangsseite der Vorrichtung anschließt, in eine Füllmaschine, die sich an die Ausgangsseite der Vorrichtung anschließt. Sterilisiertunnel und Füllmaschine sind der Übersichtlichkeit halber nicht dargestellt. Die dargestellte Vorrichtung ist von einem Reinraum umgeben, um die sterilisierten Flaschen keiner Verschmutzung auszusetzen. Die Vorrichtung der Figur 1 zeigt eine Flaschenüberleitung für nicht standfeste, labil stehende Flaschen. Erfindungsgemäß ist es jedoch möglich, die gezeigte Vorrichtung durch einfachen Austausch der Führungsteile 5 und durch Änderung der Förderrichtung und/oder Fördergeschwindigkeit der Förderbänder 8 entsprechend der Form der Führungsteile auch für standfeste größere Flaschen zu verwenden.

Die Vorrichtung der Figur 1 zeigt ein Bi-flow-Bandsystem 1 mit zwei Förderbändern 8. Auf dem Bi-flow-Bandsystem 1 sind Führungsteile 5 aufgesetzt, die die Bahn der auf den Förderbändern 8 transportierten Flaschen trompetenförmig in Richtung des Abtransportbandes 2 verengen. Das Abtransportband 2, ein dünnes Gurtband, ist rechtwinklig zur Förderrichtung der Förderbänder 8 angeordnet. Als besonderes Führungsteil ist die Seitenführung 4 im Übergangsbereich zwischen Bi-flow-Bandsystem 1 und Abtransportband 2 vorgesehen. Der Übergangsbereich wird hier von einer Bodenplatte 3 gebildet, die einen absatzlosen Übergang zwischen innerem Förderband 8 und Abtransportband 2 bildet. Die Einlaufschnecke 7 der nachgeschalteten Füllmaschine ist schematisch dargestellt. Statt einer Einlaufschnecke 7 ist auch ein Einlaufrad oder ein Direkteinlauf in den Durchtransport der Füllmaschine möglich. Eine Einrichtung mit Schwingantrieben 9 befindet sich unterhalb des Übergangsbereichs. Die Schwingantriebe dienen zur Übertragung elektromagnetisch erzeugter Vibrationen auf verschiedene Komponenten des Übergangsbereichs. Weiterhin ist eine Stauregelung über ein quer zur Einlaufrichtung der Gegenstände gespanntes flexibles PTFE-Band 10 realisiert, wobei die entsprechende Einrichtung 6 zur Stauregelung anhand der registrierten Banddehnung den Einlauf der nachkommenden Flaschen regelt.
Der Flaschenauslauf vom Sterilisiertunnel, also der Einlauf in die erfindungsgemäße Vorrichtung, und der einreihige Flascheneinlauf in die Füllmaschine, also der Flaschenauslauf aus der erfindungsgemäßen Vorrichtung, sind parallel in einer sogenannten linearen Aufstellung. Das Bi-flow-Bandsystem 1 steht somit rechtwinklig zum Flaschenauslauf des Sterilisiertunnels. Die Flaschen werden im Pulk mittels der Führungsteile 5 der Vereinzelungsstrecke zugeführt. Es dürfen dabei keine Lücken und Leerräume entstehen, in denen die Flaschen umfallen können. Dies würde zur Bruchgefahr führen und den gesamten Flaschentransport stark behindern. Die Stauregelungseinrichtung 6 steuert den Flaschennachschub vom Sterilisiertunnel. Die Flaschen werden auf einer immer schmaler werdenden bogenförmigen Bahn über das Bi-flow-Bandsystem 1 transportiert. Beide Förderbänder 8 laufen in gleicher Laufrichtung, jedoch mit verschiedenen Bandgeschwindigkeiten, um den Flaschenfluss zu optimieren. Das Innere, d. h. zur Füllmaschine gewandte Förderband läuft hierbei mit höherer Bandgeschwindigkeit.

Kritisch ist der Bereich der immer schmaler werdenden Flaschenbahn, also der Übergangsbereich zwischen Bi-flow-Bandsystem 1 und Abtransportband 2 für kleine, labil stehende Flaschen. Durch das Heißsterilisieren im Tunnel sind die Fläschchen sehr stumpf, haben also einen großen Reibungskoeffizienten und kleben dadurch aneinander. Der Flaschenpulk neigt zur Brückenbildung, wenn mehrere quer zur Laufrichtung einander berührende Flaschen sich mit den Führungsteilen 5 verkeilen. Dann wird der Flaschenfluss blockiert. Das führt zur Maschinenstörung durch fehlenden Flaschennachschub, wenn die Stauregelungseinrichtung 6 einen Flaschenstau registriert, und zur Gefahr umfallender Flaschen in die entstehenden Lücken.

Um diese Maschinenstörung von Anfang an zu vermeiden, ist es erforderlich, die Flaschen aufzulockern. Dies wird erfindungsgemäß durch die Kombination der Vorrichtungskomponenten 1 bis 6 erreicht, so dass der Flaschenpulk aufgelockert und stressfrei transportiert werden kann, bis er auf eine Reihe vereinzelt ist, die in die Fülleinrichtung einläuft.

Das Flaschenführungssystem besteht aus festen (PE-) und/oder flexiblen (PTFE-) Führungsteilen bzw. -bändern. Das Flaschenführungssystem kann erfindungsgemäß auf die verschiedenen Flaschendurchmesser und Tunnelauslaufbreiten angepasst werden. Entsprechend den eingesetzten Führungsteilen wird dann die Geschwindigkeit und Förderrichtung der Förderbänder 8 des Bi-flow-Bandsystems 1 eingestellt.

Unter dem oberen Transportbandtrum ist eine elektromagnetisch vibrierende Bodenplatte 3 angebracht. Die Bodenplatte ist so ausgebildet, dass das obere Gurtbandtrum des Transportbandes 2 in seiner Banddicke eingelassen ist, d. h. Oberkante des Transportbandes 2 und Bodenplatte 3 bilden ein Niveau ohne Stolperkanten für den Flaschenfluss. Durch unterhalb der Bodenplatte 3 angeordnete Schwingantriebe 9 werden elektromagnetische Vibrationen erzeugt und auf die Bodenplatte 3 übertragen. Durch die direkte Auflage des Gurtbandes des Abtransportbands 2 auf die Bodenplatte 3 kann die Schwingung auch auf das Gurtband und damit auf die dort transportierten Flaschen wirken. Die erzeugte Flaschenvibration lockert den Flaschenpulk und verhindert ein "Kleben" der Flaschen aneinander aufgrund des hohen Reibungskoeffizienten. Als Vibrationen sind hochfrequente Schwingungen kleiner Amplitude geeignet.

Der Auflockerungsprozess kann wirksam durch eine elektromotorisch vibrierende Seitenführung 4 unterstützt werden. Diese Seitenführung 4 ist insbesondere für kleine, labil stehende Flaschen geeignet. Zur besseren,Einstellung der notwendigen Vibrationen ist die Seitenführung 4 mit einem eigenen Schwingantrieb 9 verbunden. Das gegenüber der Seitenführung 4 vorhandene Führungsteil zur Flaschenführung ist mit der Bodenplatte 3 fest verbunden und schwingt mit dieser mit. Die Funktion von vibrierendem Transportband 2, Bodenplatte 3 und Seitenführung 4 bewirkt, dass der Flaschenfluss im kritischen Bereich nicht abreißt, dass sich keine Brücken und Lücken bilden und die Flaschen sich stetig und stressfrei vereinzeln lassen, bis sie in einer Reihe schließlich der Füllmaschine zugeführt werden können.

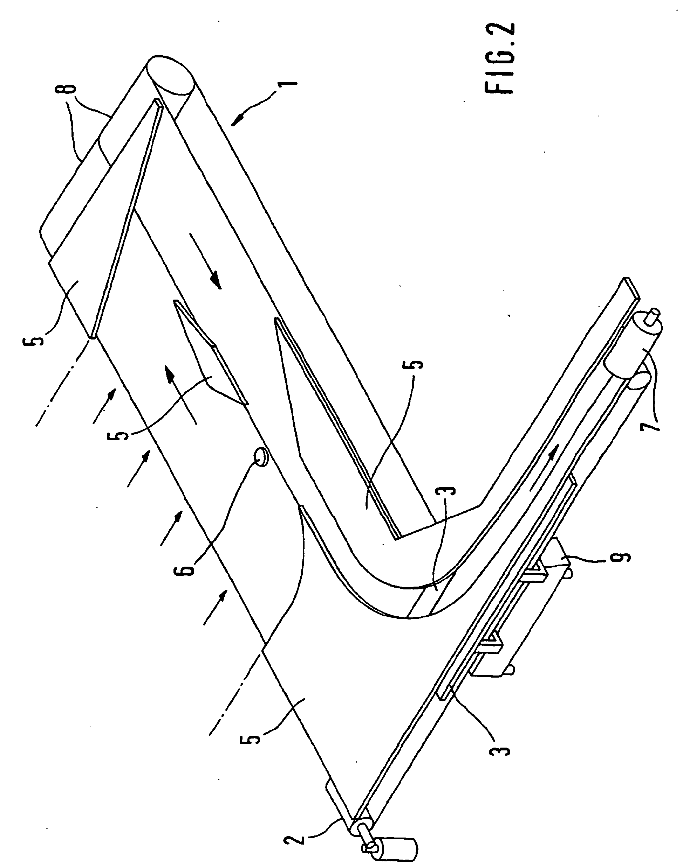

Das beschriebene System kann nun erfindungsgemäß auf den Betrieb mit größeren standfesten Flaschen umgestellt werden. Ein solches ist in Figur 2 dargestellt. Gleiche Teile werden mit gleichen Bezugsziffern bezeichnet. Das hier dargestellte System ist vor allem für Flaschen mit größerem Durchmesser geeignet.

Die Führungsteile 5 und die Seitenführung 4 der Vorrichtung gemäß Figur 1 werden nun durch die Führungsteile 5 ersetzt. Entsprechend muss die Förderrichtung der Förderbänder 8 des Bi-flow-Bandsystems 1 von Gleich- auf Gegenlauf umgestellt werden. Das Bi-flow-Band hat nun die Funktion ähnlich eines Drehtellers. Die Flaschen wie Infusionsflaschen gelangen vom Sterilisiertunnel auf das erste Förderband 8, um auf das erste Führungsteil (Formatteil oder Schikane) 5 zu treffen und auf das zweite Förderband 8 gelenkt zu werden. Unterstützend wirkt das in der Mitte zwischen den beiden Förderbändern 8 angeordnete Führungsteil 5. Eine Stauregeleinrichtung 6 ist vor diesem mittleren Führungsteil 5 angeordnet, um mittels einer Lichtschranke den Einlauf der Flaschen auf das Förderband 8 zu regeln. Vom zweiten Förderband 8 werden die Flaschen nunmehr in entgegengesetzter Richtung gefördert (Drehtellereffekt), wobei die Flaschen an den in spitzem Winkel angeordneten Konturen der Führungsteile 5 entlang laufen und sich schließlich'in eine Führungsbahn einsortieren, von der aus sie vom Bi-flow-Bandsystem 1 über das Abtransportband 2 zur Einlaufschnecke/-rad 7 der nachfolgenden Füllmaschine gelangen. Bei vollgefüllter Führungsbahn laufen überzählige Flaschen entlang der weiteren Kontur der Führungsteile zurück auf das rückläufige Band 8 des Bi-flow-Bandsystems 1 erneut in den Kreislauf.

Die beschriebenen Führungsteile 5 sind erfindungsgemäß steckbar ausgeführt, so dass eine schnelle Umschaltung des Systems von labil stehenden auf standfeste Flaschen möglich ist.

Die Vibrationen der vom Schwingantrieb 9 angetriebenen Bodenplatte 3 begünstigt den Transport der einreihigen Flaschen über die Bodenplatte 3 vom Bi-flow-Bandsystem 1 auf das Abtransportband 2. Der Schwingantrieb 9 der Seitenführung 4 aus Figur 1 ist hier nicht aktiv.

Die in den Figuren 1 und 2 dargestellte Vorrichtung stellt somit eine für das ganze Spektrum vom beispielsweise Injektions- und Infusionsflaschen geeignete Überleitungsvorrichtung von Sterilisiertunnel zu Füllmaschine dar. Hierdurch wird der gesamte Verarbeitungsprozess vereinfacht, die Größe und der Energieeinsatz für umgebende Reinräume verringert und Kosten gespart.

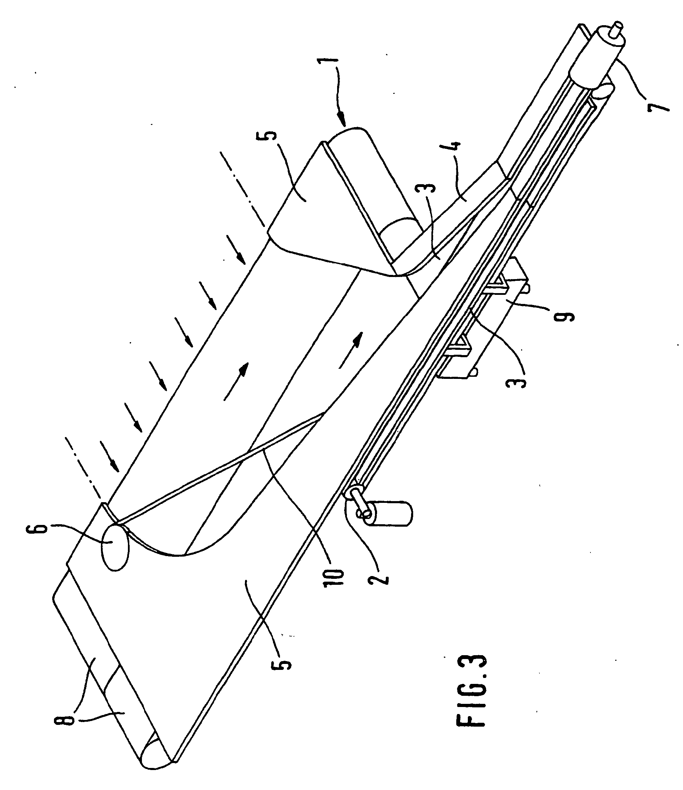

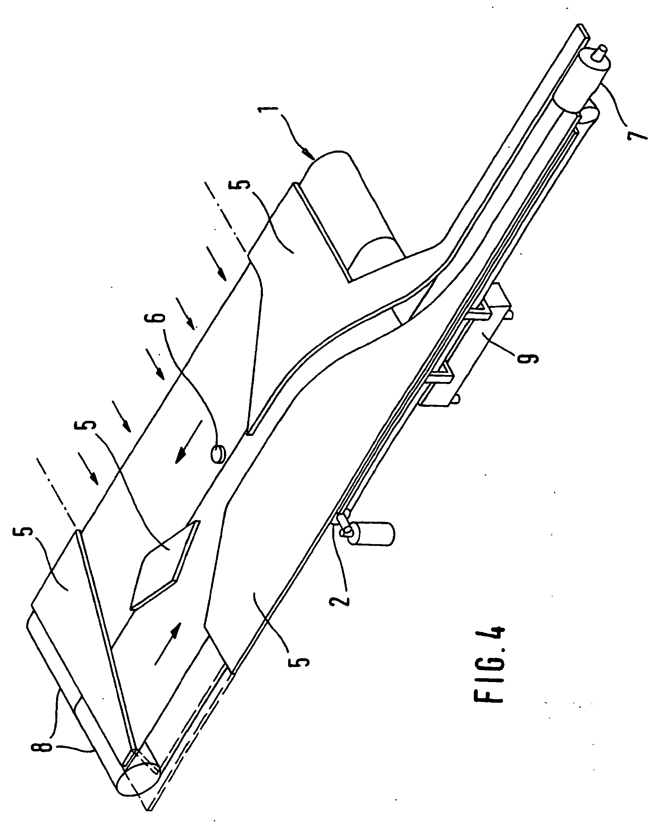

Eine erfindungsgemäße Vorrichtung in der sogenannten LAufstellung zeigen die Figuren 3 und 4. Hier ist die Einlaufrichtung der Flaschen vom Sterilisiertunnel in die Vorrichtung rechtwinklig zur Einlaufrichtung der Flaschen in die Füllmaschine. Gleiche Vorrichtungsteile sind mit gleichen Bezugszeichen bezeichnet. Die Führungsteile 5, eventuell auch die Seitenführung 4, sind entsprechend dieser L-Anordnung gegenüber denen aus Figur 1 abgeändert. Insgesamt erhält man eine teils trompeten- teils trichterförmig sich verengende Bahn für die zum Abtransportband 2 geförderten Flaschen. Im übrigen stimmen Funktion und Gestalt der Vorrichtungselemente der Figur 3 mit denen der Figur 1 im wesentlichen überein, weshalb auf eine Wiederholung der dortigen Ausführungen hier verzichtet werden kann.

Durch Austausch der steckbar ausgeführten Führungsteile 5 einschließlich der Seitenführung 4 gelangt man zu der in Figur 4 dargestellten Vorrichtung, die sich insbesondere für größere standfeste Flaschen eignet. Auch hier sei wiederum auf die Ausführungen im Zusammenhang mit Figur 2 verwiesen, da Funktion und Gestalt der Vorrichtungsteile sich im wesentlichen entsprechen.

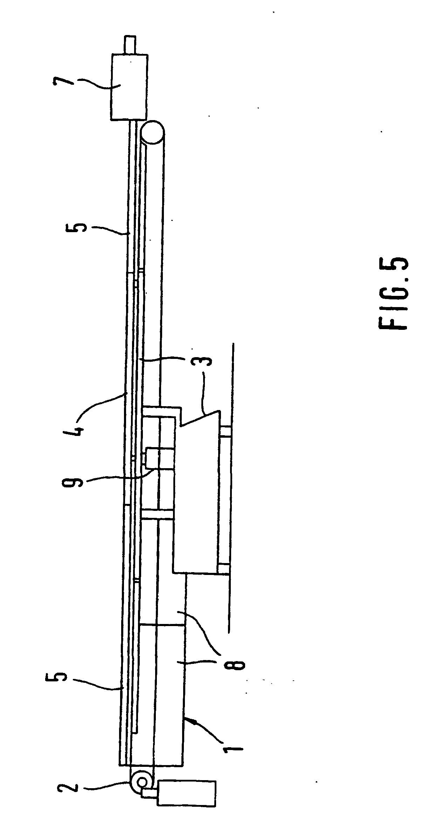

In Figur 5 ist schließlich eine Seitenansicht einer Vorrichtung gemäß Figur 1 dargestellt. Gleiche Komponenten besitzen gleiche Bezugszeichen. Zu Funktion und Arbeitsweise der Vorrichtung sei auf die Ausführungen im Zusammenhang mit Figur 1 verwiesen.

Die oben beschriebenen Varianten können durch ihre spiegelbildliche Ausführungen (sogenannte Linksaufstellungen) ersetzt werden. Maßgeblich ist bei der vorliegenden Erfindung, dass mit einer einzigen Maschinenkonfiguration kleine nicht standfeste Flaschen und große standfeste Flaschen vereinzelt werden können. Dies wird durch steckbar ausgeführte austauschbare Führungsteile / Seitenführungen mit umschaltbar betreibbaren Förderbändern des Bi-flow-Bandsystems, insbesondere in Kombination mit auf die geförderten Flaschen übertragenen Vibrationen erzielt.

## Patentansprüche

1. Vorrichtung zum Transport von Gegenständen wie Flaschen von einer Einlaufseite zu einer Auslaufseite, mit einem Bi-Flow-Bandsystem (1), das mindestens zwei parallele, in Gleich- oder Gegenrichtung laufende Förderbänder (8) umfasst, mit oberhalb der Förderbänder (8) angeordneten, austauschbaren Führungsteilen (4, 5) zur Führung der auf den Förderbändern (8) geförderten Gegenstände in Richtung zur Auslaufseite und mit einem Abtransportband (2) zur Aufnahme vereinzelter Gegenstände vom Bi-Flow-Bandsystem (1) zur Förderung dieser Gegenstände in einer Reihe zur Auslaufseite, d**adurch gekennzeichnet**, dass zwei durch die Form der Führungsteile verschiedene Sätze von Führungsteilen (4, 5) vorgesehen sind, und dass die Laufrichtung der Förderbänder (8) umstellbar ist, derart, dass zwei parallel nebeneinander angeordnete Förderbänder (8) in Abhängigkeit des eingesetzten Satzes Führungsteile stets im Gleichlauf oder stets im Gegenlauf angetrieben sind, wobei beim Gleichlauf der Förderbänder (8) die Förderbänder (8) unterschiedliche Geschwindigkeiten aufweisen.

2. Vorrichtung nach Anspruch 1, **dadurch gekennzeichnet, dass** im Übergangsbereich vom Bi-flow-Bandsystem (1) zum Abtransportband (2) eine Bodenplatte (3) sowie ein Schwingantrieb (9) angeordnet sind zur Übertragung vom Vibrationen auf zumindest die Bodenplatte (3) und/oder das Abtransportband (2) und/oder Abschnitte der Führungsteile (4, 5).

3. Vorrichtung nach Anspruch 1 oder 2, **dadurch gekennzeichnet, dass** im Übergangsbereich zwischen Bi-flow-Bandsytem (1) und Abtransportband (2) eine Seitenführung (4) vorgesehen ist, die sich in Richtung des Abtransportbandes (2) erstreckt, und die mittels eines Schwingantriebs (9) in Vibration versetzbar ist.

4. Vorrichtung nach einem der Ansprüche 1 bis 3, **dadurch gekennzeichnet, dass** die Förderbänder des Bi-flow-Bandsystems (1) senkrecht oder parallel zu dem Abtransportband (2) angeordnet sind.

5. Vorrichtung nach einem der Ansprüche 1 bis 4, **dadurch gekennzeichnet, dass** auf dem Bi-flow-Bandsystem (1) Mittel (6) zur Stauregelung vorgesehen sind, die die Zufuhr von Gegenständen auf der Einlaufseite regeln, wobei diese Mittel (6) insbesondere eine Lichtschranke oder ein quer zur Einlaufrichtung der Gegenstände gespanntes flexibles Band (10) umfassen.

6. Verfahren zum Transport von Gegenständen wie Flaschen unter Verwendung einer Vorrichtung gemäß einem der Ansprüche 1 bis 5,
**dadurch gekennzeichnet,**
**dass** für labil stehende Gegenstände die Förderbänder (8) des Bi-flow-Bandsystems (1) in Gleichrichtung mit unterschiedlichen Geschwindigkeiten betrieben und Führungsteile (4, 5) eingesetzt werden, die die Bahnbreite des Bi-flow-Bandsystems (1) trichter- und/oder trompetenförmig begrenzen,
und **dass** für standfeste Gegenstände die Förderbänder (8) des Bi-flow-Bandsystems (1) in Gegenrichtung betrieben und anders geformte Führungsteile (5) eingesetzt werden, an deren Kontur die Gegenstände entlang laufen, bis sie sich auf dem zum Abtransportband (2) hinlaufenden Förderband in eine durch Führungsteile (5) gebildete Führungsbahn einsortieren und vereinzelt dem Abtransportband (2) zugeführt werden.

7. Verfahren nach Anspruch 6, **dadurch gekennzeichnet, dass** für labil stehende Gegenstände der oder die Schwingantriebe (9) im Übergangsbereich vom Bi-flow-Bandsystem (1) zum Abtransportband (2) und/oder an der Seitenführung (4) in Betrieb genommen werden.

## Claims

1. Device for conveying articles such as bottles from an inlet side to an outlet side, having a bi-flow belt system (1) which comprises at least two parallel conveyor belts (8) running in the same direction or in opposite directions, having exchangeable guide parts (4, 5), arranged above the conveyor belts (8), for guiding the articles conveyed on the conveyor belts (8) in the direction of the outlet side, and having a discharge conveyor belt (2) for receiving separated articles from the bi-flow belt system (1) in order to convey these articles in a row to the outlet side, **characterized in that** two sets of guide parts (4, 5) which differ in the shape of the guide parts are provided and **in that** the running direction of the conveyor belts (8) can be switched in such a way that, depending on the set of guide parts used, two conveyor belts (8) arranged next to one another in parallel are always driven in co-rotation or always in contrarotation, the conveyor belts (8) having different speeds when there is co-rotation of the conveyor belts (8).

2. Device according to Claim 1, **characterized in that** a base plate (3) and an oscillating drive (9) are arranged in the transition region from the bi-flow belt system (1) to the discharge conveyor belt (2) in order to transfer vibrations to at least the base plate (3) and/or the discharge conveyor belt (2) and/or portions of the guide parts (4, 5).

3. Device according to Claim 1 or 2, **characterized in that** a lateral guide (4) which extends in the direction of the discharge conveyor belt (2) and can be set in vibration by means of an oscillating drive (9) is provided in the transition region between the bi-flow belt system (1) and discharge conveyor belt (2).

4. Device according to one of Claims 1 to 3, **characterized in that** the conveyor belts of the bi-flow belt system (1) are arranged perpendicularly or parallel to the discharge conveyor belt (2).

5. Device according to one of Claims 1 to 4, **characterized in that** means (6) for regulating accumulation are provided on the bi-flow belt system (1) and regulate the inflow of articles on the inlet side, these means (6) particularly comprising a light barrier or a flexible band (10) clamped transversely with respect to the inlet direction of the articles.

6. Method of conveying articles such as bottles using a device according to one of Claims 1 to 5, **characterized in that**, in the case of dimensionally unstable articles, the conveyor belts (8) of the bi-flow belt system (1) are operated in the same direction at different speeds and use is made of guide parts (4, 5) which bound the path width of the bi-flow belt system (1) in the form of a funnel and/or trumpet, and **in that**, in the case of dimensionally stable articles, the conveyor belts (8) of the bi-flow belt system (1) operate in opposite directions and use is made of differently shaped guide parts (5) along whose contour the articles run until, when on the conveyor belt running towards the discharge conveyor belt (2), they sort themselves into a guide path formed by guide parts (5) and are fed in separated form to the discharge conveyor belt (2).

7. Method according to Claim 6, **characterized in that**, in the case of dimensionally unstable articles, the oscillating drive or drives (9) are set in operation in the transition region from the bi-flow belt system (1) to the discharge conveyor belt (2) and/or at the lateral guide (4).

## Revendications

1. Dispositif pour transporter des objets, tels que des bouteilles, d'un côté d'arrivée à un côté de départ, comprenant un système de bandes à double flux (1) ayant au moins deux bandes transporteuses (8) parallèles circulant dans le même sens ou en sens inverse l'une de l'autre, des pièces de guidage interchangeables (4, 5), disposées au-dessus des bandes transporteuses (8), destinées à guider les objets transportés sur les bandes transporteuses (8) en direction du côté de départ, et une bande d'évacuation (2) destinée à recevoir des objets individualisés en provenance du système de bandes à double flux (1) pour transporter ces objets au côté de départ en une file,
**caractérisé en ce qu'**
il est prévu deux jeux de pièces de guidage (4, 5) qui diffèrent par la forme des pièces de guidage, et le sens de circulation des bandes transporteuses (8) peut être inversé de telle manière que deux bandes transporteuses (8) disposées parallèlement l'une à côté de l'autre soient entraînées en permanence dans le même sens ou en permanence en sens inverse l'une de l'autre, en fonction du jeu de pièces de guidage utilisé, les bandes transporteuses (8) présentant des vitesses différentes lorsque ces bandes transporteuses (8) circulent dans le même sens.

2. Dispositif selon la revendication 1,
**caractérisé en ce que**
dans la région de transfert du système de bandes à double flux (1) à la bande d'évacuation (2), sont disposés une plaque de fond (3) ainsi qu'un entraînement oscillant (9), pour transmettre des vibrations au moins à la plaque de fond (3) et/ou à la bande d'évacuation (2) et/ou à des segments des pièces de guidage (4, 5).

3. Dispositif selon la revendication1 ou 2,
**caractérisé en ce que**
dans la région de transfert entre le système de bandes à double flux (1) et la bande d'évacuation (2), est prévu un guide latéral (4) qui s'étend selon la direction de la bande d'évacuation (2) et qui peut être mis en vibration au moyen d'un entraînement oscillant (9).

4. Dispositif selon une des revendications 1 à 3,
**caractérisé en ce que**
les bandes transporteuses du système de bandes à double flux (1) sont disposées perpendiculairement ou parallèlement à la bande d'évacuation (2).

5. Dispositif selon une des revendications 1 à 4,
**caractérisé en ce que**
sur le système de bandes à double flux (1), sont prévus des moyens (6) pour le traitement des bourrages, qui règlent l'acheminement d'objets sur le côté d'arrivée, ces moyens (6) comprenant en particulier une barrière photoélectrique ou une bande flexible (10) tendue transversalement à la direction d'arrivée des objets.

6. Procédé de transport d'objets tels que des bouteilles qui utilise un dispositif selon une des revendications 1 à 5,
**caractérisé en ce que**
pour des objets instables, les bandes transporteuses (8) du système de bandes à double flux (1) sont entraînées dans le même sens à des vitesses différentes et on utilise des pièces de guidage (4, 5) qui limitent la largeur de la piste du système de bandes à double flux (1), en lui donnant une forme de trémie et/ou de trompette et, pour des objets stables, les bandes transporteuses (8) du système de bandes à double flux (1) sont entraînées l'une en sens inverse de l'autre et on utilise des pièces de guidage (5) d'une forme différente, le long du contour desquelles les objets circulent, jusqu'à ce qu'ils se classent dans une piste de guidage formée par les pièces de guidage (5), sur la bande transporteuse qui avance vers la bande transporteuse d'évacuation (2), et qu'ils soient acheminés individuellement à la bande d'évacuation (2).

7. Procédé selon la revendication 6,
**caractérisé en ce que**
pour les objets instables, l'entraînement ou les entraînements oscillants (9) sont mis en action dans la région de transfert du système de bandes à double flux (1) à la bande d'évacuation (2) et/ou au droit du guide latéral (4).
